# EUROPEAN PATENT APPLICATION

(11) **EP 2 704 469 A1**
(43) Date of publication of application: **05.03.2014**
(21) Application number: 11864151.3
(22) Date of filing: 26.04.2011
(51) Int. Cl.: H04W 16/14

(54) **BASE STATION, COMMUNICATION TERMINAL AND TRIGGER METHOD FOR INTERFERENCE AVOIDANCE MESSAGE USED IN COMMUNICATION TERMINAL**

(71) Applicant: Fujitsu Limited, Kawasaki-shi, Kanagawa 211-8588 (JP)
(72) Inventor: WANG, Weiwei, Beijing 100025 (CN); LU, Yanling, Beijing 100025 (CN); ZHOU, Hua, Beijing 100025 (CN)
(74) Representative: Stebbing, Timothy Charles
(86) International application number: PCT/CN2011/073306
(87) International publication number: WO 2012/145894

(57) **Abstract**

The present invention relates to a base station, a communication terminal and a method for triggering an interference avoidance message for a communication terminal. The communication terminal comprises a Long Term Evolution (LTE) module and a communication module coexisted with the LTE module. The method comprising: a measurement process for measuring a signal quality parameter and a traffic flow parameter; a traffic flow judgment process for judging whether the traffic flow parameter satisfies a predetermined condition; a signal quality judgment process for judging whether the signal quality parameter satisfies a predetermined condition; a triggering determination process for determining whether a trigging condition is satisfied according to a judgment result of the traffic flow judgment process and a judgment result of the signal quality judgment process; and transmitting the interference avoidance message when the triggering determination process determines that the trigging condition is satisfied.

## Description

### Technical Field

The present invention relates to the field of wireless communication technologies, and particularly, to the field of wireless communication technologies related to interference avoidance trigger message.

### Background

In the Long Term Evolution (LTE) and the Advanced LTE (LTE-A) of the wireless communication system, in order to realize the simultaneous access of multiple networks, a plurality of communication modules will be integrated on the User Equipment (UE) (this situation is referred to as device coexistence herein). These communication modules for example include LTE/LTE-A module, Wireless Local Area Network (WLAN) module, Bluetooth module and Global Navigation Satellite System (GNSS) module. Herein modules other than the LTE/LTE-A module, such as the WLAN module, the Bluetooth module and the GNSS module are collectively referred to as coexisted modules. In addition, for the sake of simplicity, the LTE/LTE-A module is referred to as LTE module for short, which represents an LTE module, an LTE-A module or both of them. Since the LTE module and the coexisted module have a short physical distance therebetween and their working frequencies are close to each other, there may be severe coexistence interference between the LTE module and the coexisted module, and their working performances will be influenced. Thus, the 3GPP starts a new research group to carry out researches in this aspect. At present, in order that the network side (i.e., the eNB) acquires the situation of coexistence interference, the 3GPP defines a proactive trigger message and a reactive trigger message, which are both examples of the interference avoidance message. The proactive trigger message is transmitted when the UE finds that a coexistence interference may occur in the service frequency and non-service frequency of the LTE module, and the reactive trigger message is transmitted when the UE finds that a serious coexistence interference has occurred in the service frequency of the LTE module.

In the research of the present invention, the inventor notices that the conventional solution at present has some deficiencies. Specifically, the conventional solution at present sorts the signals received by the LTE module into two sets: one set includes the signal transmitted from the base station to the LTE module, without the signal transmitted from the coexisted module; the other set includes both the signal transmitted from the base station to the LTE module and the signal transmitted from the coexisted module. Next, the severity of coexistence interference is judged by measuring signal strengths of the signals of the two sets, respectively. But the solution does not explicitly point out how to compare the signal strengths of the two signals, and the traffic flow of the coexisted system is neglected when the severity of coexistence interference is judged.

To be noted, the above conventional technology is just elaborated for the convenience of clearly and completely describing the technical solution of the present invention, and for facilitating the understanding of a person skilled in the art. It shall not be deemed that the previous technical solution is known to a person skilled in the art just because the solution has been elaborated in the Background section of the present invention.

### Summary

The present invention is proposed with respect to the above deficiencies of the prior art, so as to solve or relieve one or more deficiencies of the prior art, and provide at least one beneficial selection.

According to an aspect of the present invention, there is provided a method for triggering an interference avoidance message, for a communication terminal having a Long Term Evolution (LTE) module and a communication module coexisted with the LTE module, the method comprising: a measurement process for measuring a signal quality parameter and a traffic flow parameter; a traffic flow judgment process for judging whether the traffic flow parameter satisfies a predetermined condition; a signal quality judgment process for judging whether the signal quality parameter satisfies a predetermined condition; a triggering determination process for determining whether a trigging condition is satisfied according to a judgment result of the traffic flow judgment process and a judgment result of the signal quality judgment process; and transmitting the interference avoidance message when the triggering determination process determines that the trigging condition is satisfied.

According to another aspect of the present invention, there is provided a communication terminal having an LTE module and a communication module coexisted therewith, comprising: a measurement unit configured to measure a signal quality parameter and a traffic flow parameter; a traffic flow judgment unit configured to judge whether the traffic flow parameter satisfies a predetermined condition; a signal quality judgment unit configured to judge whether the signal quality parameter satisfies a predetermined condition; a triggering determination unit configured to determine whether a trigging condition is satisfied according to a judgment result of the traffic flow judgment unit and a judgment result of the signal quality judgment unit; and an interference avoidance message transmitting unit configured to transmit an interference avoidance message when the triggering determination unit determines that the trigging condition is satisfied.

According to still another aspect of the present invention, there is provided a base station, comprising a command unit, a threshold transmitting unit and a storage unit; the command unit is configured to generate a command instructing the threshold transmitting unit to transmit any one, two or all the three of a signal quality judgment threshold, a traffic flow judgment threshold and a triggering condition threshold; when receiving the command of the command unit, the threshold transmitting unit transmits the signal quality judgment threshold and/or the traffic flow judgment threshold and/or the triggering condition threshold corresponding to the command and stored in the storage unit; the signal quality judgment threshold is used by a communication device served by the base station to judge whether the signal quality parameter satisfies a predetermined condition; the traffic flow judgment threshold is used by the communication device served by the base station to judge whether the traffic flow satisfies a predetermined condition; and the triggering condition threshold is used by the communication device served by the base station to determine whether an interference avoidance message shall be transmitted.

To be noted, the term "comprise/include/have" used herein specifies the presence of feature, integer, step or component, not excluding the presence or addition of one or more other features, integers, steps or components.

The above general descriptions and the following detailed descriptions made with reference to the drawings are all schematic, rather than limitations to the protection scope of the present invention.

### Brief Description of the Drawings

The above and other objects, characteristics and advantages of the present invention will be understood more clearly through the following detailed descriptions of the present invention made with reference to the drawings. Throughout the drawings, same or similar reference signs denote same or similar elements.
Fig. 1 is a schematic diagram of a mobile communication system applicable to various embodiments of the present invention;
Fig. 2 is a schematic diagram of a mobile phone used as a communication device according to an embodiment of the present invention;
Fig. 3 is a functional block diagram of a communication device according to an embodiment of the present invention;
Fig. 4 is a flowchart of a method for triggering an interference avoidance message according to an embodiment of the present invention;
Fig. 5 is a flowchart of a method for triggering an interference avoidance message according to another embodiment of the present invention;
Fig. 6 is a functional block diagram of a communication device 300' according to another embodiment of the present invention; and
Fig. 7 is a schematic block diagram of a base station according to an embodiment of the present invention.

### Description of the Embodiments

The specific embodiments of the present invention are detailedly described as follows with reference to the drawings. The embodiments are all exemplary, rather than limitations to the protection scope of the present invention.

Next, a mobile phone is taken as an example to describe the embodiments of the present invention. To be noted, the present invention is not limited to the mobile phone, and it is applicable to various electronic devices such as PDA, portable computer, game machine, etc., which have the LTE module and the coexisted module.

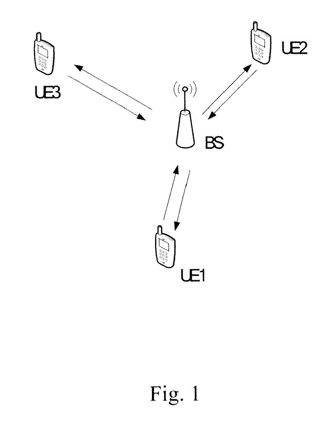

Fig. 1 is a schematic diagram of a mobile communication system applicable to various embodiments of the present invention.

As illustrated in Fig. 1, the communication system comprises a base station (BS or eNB) and a plurality of mobile terminals served by the base station. Although Fig. 1 only illustrates one base station and three terminals, it shall be appreciated that more base stations and more or less mobile terminals may also be comprised. In addition, it shall be appreciated that the system may further comprise a relay station, a micro base station forming a piconet, and various upper layer devices controlling and serving the base station, which are known to a person skilled in the art, and herein are not described in details.

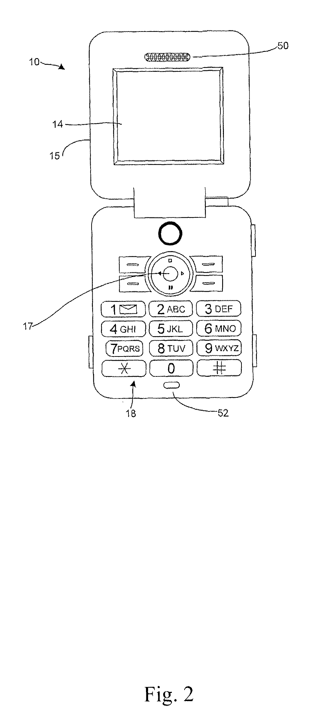

Fig. 2 is a schematic diagram of a mobile phone used as a communication device according to an embodiment of the present invention. As illustrated in Fig. 2, a mobile phone 10 may be a flip phone having a cover 15 movable between an open position and a closed position. In Fig. 2, the cover 15 is illustrated as being located at the open position. It shall be appreciated that the mobile phone 10 may be other structure such as a "bar phone" or a "slide phone".

The electronic device 10 may include a display 14 that displays information such as operating state, time, telephone number, telephone directory, menus, etc. to the user, so that the user can utilize various features of the electronic device 10. The display 14 may be further configured to visually display the content received by the electronic device 10 and/or retrieved from a memory (not illustrated) of the electronic device 10. The display 14 may be configured to present images, videos and other graphics (e.g., photos, mobile TV programs and game-related videos) to the user.

A keypad 18 provides multiple user input operations. For example, the keypad 18 may include alphanumeric keys that allow alphanumerical information (e.g., telephone number, telephone list, telephone directory, notepad, text, etc.) to be input. In addition, the keypad 18 may include specific function keys 17, such as a "call send" key for initiating or answering a phone call, and a "call end" key for ending or hanging up the phone call. The specific function keys may further include a menu navigation key and a selection key which conveniently perform navigation through menus displayed on the display 14. For example, a pointing device and/or a navigation key may be provided to receive a directional input from the user. In addition, the display 14 and the keypad 18 may be used in combination to realize the soft key function. The electronic device 10 further comprises parts essential for realizing its functions, such as antenna, microcontroller, etc.

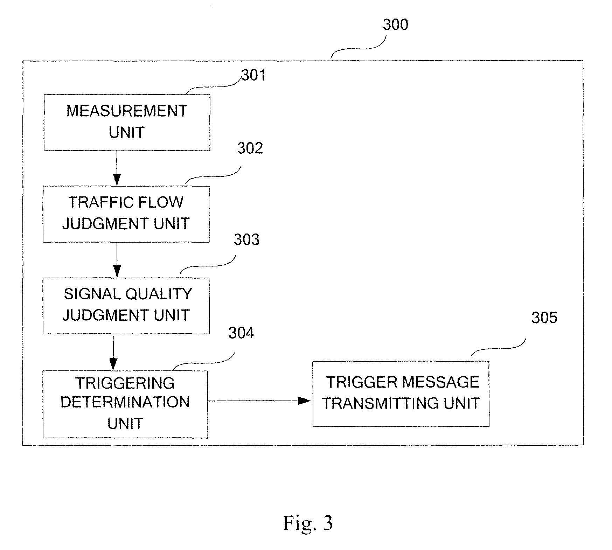

Fig. 3 illustrates a functional block diagram of a communication device according to an embodiment of the present invention. Fig. 3 is just schematic, and other functional parts not influencing the understanding of the present invention are omitted.

As illustrated in Fig. 3, a communication device 300 according to an embodiment of the present invention comprises a measurement unit 301, a traffic flow judgment unit 302, a signal quality judgment unit 303, a triggering determination unit 304 and a trigger message transmitting unit 305.

The measurement unit 301 measures a signal quality parameter and a traffic flow parameter.

The signal quality parameter indicates the received signal quality of the LTE module.

In one embodiment, the signal quality parameter is the received signal quality of the LTE module, such as reference signal received power (RSRP) and/or reference signal received quality (RSRQ).

In another embodiment, the signal quality parameter is a difference between RSRQ_{noISM} and RSRQ_{ISM}. The signals received by the LTE module are sorted into two sets: one set (also referred to as first signal set) includes the signal transmitted from a base station to the LTE module, without the signal transmitted from the coexisted module; the other set (also referred to as second signal set) includes both the signal transmitted from the base station to the LTE module and the signal transmitted from the coexisted module. The reference signal quality parameter measured in the first signal set is RSRQ_{noISM}, and the reference signal quality parameter measured in the second signal set is RSRQ_{ISM}.

An example of the measurement method is to selectively measure several signal sample points from the first signal set, and average the measurement results of the signal sample points, so as to obtain the final measurement result. To be noted, this is just one method for measuring the reference signal quality, and the measurement may be made in various methods known by a person skilled in the art at present or in future. In other words, in this embodiment, the signal quality parameter is a difference between a reference signal received quality parameter of a signal transmitted from the base station to the LTE module and a reference signal received quality parameter of a mixed signal of the signal transmitted from the base station to the LTE module and a signal transmitted from the coexisted module.

The measurement unit 301 may measure other signal quality parameter.

The traffic flow parameter indicates the traffic flow characteristics on the LTE module and the coexisted module.

In one embodiment, the traffic flow parameter is the number(amount) of LTE sub-frames influenced by data transmission of the coexisted module (the number of LTE sub-frames influenced by the coexisted module). In one embodiment, during an LTE sub-frame, when a communication module coexisted with the LTE module transmits data, it means that this sub-frame has been influenced. In the LTE system, the data transmission and reception are performed in the unit of sub-frame. For example, among one hundred sub-frames from sub-frame 1 to sub-frame 100, the LTE module receives data and/or reference signal in some sub-frames (i.e., LTE-received sub-frames), and transmits data in some sub-frames (i.e., LTE-transmitted sub-frames), while the coexisted module receives and transmits data independently from the LTE module. As a result, in some LTE sub-frames the LTE module receives or transmits data but the coexisted module does not transmit any data, while in some LTE sub-frames the LTE module receives or transmits data and the coexisted module also transmits data. Therefore, the number of LTE sub-frames influenced by the coexisted module can be obtained by counting the LTE sub-frames concerned in data transmission of the coexisted module.

In another embodiment, the traffic flow parameter is the number of LTE sub-frames when the LTE module receives data while the coexisted module transmits data, i.e., the number of LTE sub-frames such that the LTE module receives data while the coexisted module transmits data in the LTE sub-frames.

In still another embodiment, the traffic flow parameter comprises both the number of sub-frames when the LTE module receives data, and the number of sub-frames influenced by the communication module coexisted with the LTE module.

In yet another embodiment, the traffic flow parameter is a ratio between the number of LTE-received sub-frames influenced by the coexisted module and the number of LTE-received sub-frames.

The measurement unit 301 may measure other traffic flow parameter.

The traffic flow judgment unit 302 judges whether the traffic flow parameter satisfies a predetermined condition.

In a case where the traffic flow parameter measured by the measurement unit 301 is the number of LTE sub-frames influenced by the coexisted module, the traffic flow judgment unit 302 judges that the traffic flow parameter satisfies the predetermined condition when the number of LTE sub-frames influenced by the coexisted module is larger than a predetermined threshold.

In a case where the traffic flow parameter measured by the measurement unit 301 is the number of LTE-received sub-frame influenced by the coexisted module, the traffic flow judgment unit 302 judges that the traffic flow parameter satisfies the predetermined condition when the number of LTE-received sub-frames influenced by the coexisted module is larger than a predetermined threshold.

In a case where the traffic flow parameter measured by the measurement unit 301 being the number of LTE-received sub-frames and the number of LTE sub-frames influenced by the coexisted module, the traffic flow judgment unit 302 judges that the traffic flow parameter satisfies the predetermined condition when the number of LTE-received sub-frames is smaller than a first predetermined threshold, and the number of LTE sub-frames influenced by the coexisted module is larger than a second predetermined threshold. The first and second predetermined thresholds may be the same as or different from each other.

In a case where the traffic flow parameter measured by the measurement unit 301 is a ratio between the number of LTE-received sub-frames influenced by the coexisted module and the number of sub-frames when the LTE module receives data, the traffic flow judgment unit 302 judges that the traffic flow parameter satisfies the predetermined condition when the ratio between the number of LTE-received sub-frames influenced by the coexisted module and the number of sub-frames when the LTE module receives data is larger than a predetermined threshold.

The signal quality judgment unit 303 judges whether the signal quality parameter satisfies a predetermined condition.

In a case where the signal quality parameter measured by the measurement unit 301 is the received signal quality parameter of the LTE module, such as RSRP and/or RSRQ, the signal quality judgment unit 303 judges that the signal quality parameter satisfies the predetermined condition when the received signal quality parameter of the LTE module is lower than a predetermined threshold, e.g., the RSRP is lower than the predetermined threshold and/or the RSRQ is lower than the predetermined threshold.

In a case where the signal quality parameter measured by the measurement unit 301 is RSRQ_{noISM}-RSRQ_{ISM}, the signal quality judgment unit 303 judges that the signal quality parameter satisfies the predetermined condition when RSRQ_{noISM}-RSRQ_{ISM} is larger than a predetermined threshold.

To be noted, the measurement unit 301 may measure the traffic flow parameters used in the above embodiments in combination, the traffic flow judgment unit 302 may judge these traffic flow parameters, respectively, and only when a part of (e.g., satisfying a voting condition) or all the traffic flow parameters satisfy the predetermined condition, it is judged that the traffic flow parameters satisfy the predetermined condition.

To be noted, the measurement unit 301 may measure the signal quality parameters used in the above embodiments in combination, the signal quality judgment unit 303 may judge these signal quality parameters, respectively, and only when a part of (e.g., satisfying a voting condition) or all the signal quality parameters satisfy the predetermined condition, it is judged that the signal quality parameters satisfy the predetermined condition.

The triggering determination unit 304 determines whether a trigging message is to be transmitted according to the judgment results of the traffic flow judgment unit 302 and the signal quality judgment unit 303.

In one embodiment, the triggering determination unit 304 determines to transmit the trigging message only when the judgment results of the traffic flow judgment unit 302 and the signal quality judgment unit 303 are both positive during a predetermined period.

In another embodiment, the triggering determination unit 304 determines to transmit the trigging message when the number of times the positive judgment results of the traffic flow judgment unit 302 and the signal quality judgment unit 303 are both positive is larger than a predetermined number of times during a predetermined period.

In still another embodiment, the triggering determination unit 304 determines to transmit the trigging message when the positive judgment results of the signal quality judgment process and the traffic flow judgment process continuously last for a predetermined number of times.

The trigger message transmitting unit 305 transmits a trigger message according to an instruction from the triggering determination unit. That is, when the triggering determination unit 304 determines to transmit a trigging message, the trigger message transmitting unit 305 transmits the trigging message (interference avoidance message). One form of interference avoidance message only indicates that the current LTE module has been severely interfered with by an LTE coexisted module. Another form of interference avoidance message not only indicates that the current LTE module has been severely interfered with by an LTE coexisted module, but also includes some auxiliary information (e.g., the unavailable frequency, the cycle where the LTE module and the LTE coexisted module works alternatively, and the working time of respective modules in each cycle) to help the base station to arrange an appropriate interference avoidance mechanism, thereby reducing or avoiding interferences.

In one embodiment, both the traffic flow judgment unit 302 and the signal quality judgment unit 303 perform the judgment on the upper layer of the information flow (i.e., the layer above the physical layer and/or the data link layer). In one embodiment, the traffic flow judgment unit 302 performs the judgment on the bottom layer of the information flow (i.e., the physical layer and/or the data link layer), while the signal quality judgment unit 303 performs the judgment on the upper layer of the information flow.

Next, the procedures of an exemplary method (a method for triggering an interference avoidance message) executed by the communication device according to the present invention will be described. The descriptions of the communication device can help the understanding of the method executed by the communication device, and the descriptions of the processing device of the communication device can help the understanding of the communication device.

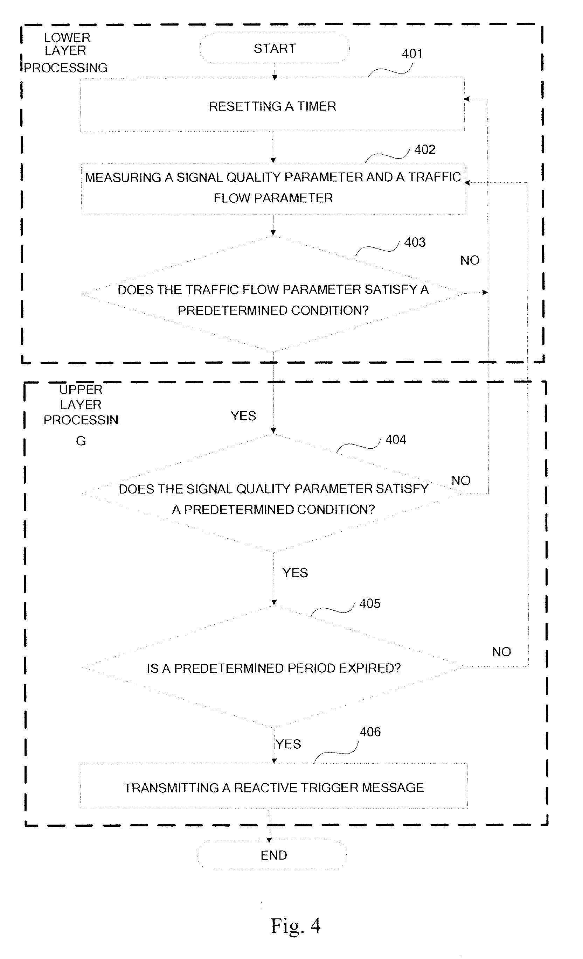

Fig. 4 is a flowchart of a method for triggering an interference avoidance message according to an embodiment of the present invention.

As illustrated in Fig. 4, firstly in step 401, a timer is reset (or initialized). Next, in step 402, a traffic flow parameter and a signal quality parameter are measured. Next, in step 403, it is judged whether the traffic flow parameter satisfies a predetermined condition. When it is judged in step 403 that the traffic flow parameter does not satisfy the predetermined condition (step 403, No), the process returns to step 401 to reset the timer and repeat the subsequent steps. On the other hand, when it is judged in step 403 that the traffic flow parameter satisfies the predetermined condition (step 403, Yes), the process enters step 404. In step 404, it is judged whether the signal quality parameter satisfies a predetermined condition. When it is judged in step 404 that the signal quality parameter does not satisfy the predetermined condition (step 404, No), the process returns to step 401 to reset the timer and repeat the subsequent steps. On the other hand, when it is judged in step 404 that the signal quality parameter satisfies the predetermined condition (step 404, Yes), the process enters step 405. In step 405, it is judged whether a predetermined period is expired (i.e., whether the measured signal quality parameter and traffic flow parameter both satisfy a certain condition in a predetermined period). When it is judged that the predetermined period is still not expired (step 405, No), the process returns to step 402, and continues to measure the parameters. When it is judged that the predetermined period is expired (step 405, Yes), a reactive trigger message is determined to be transmitted. Next, in step 406, the reactive trigger message is transmitted, and then the process ends.

In the embodiment as illustrated in Fig. 4, the measurement of the signal quality parameter and the traffic flow parameter, and the judgment about whether the traffic flow parameter satisfies the predetermined condition, are performed on the bottom layer, while the judgment about whether the signal quality parameter satisfies the predetermined condition is performed on the upper layer, but the situation is not restrictive. In an alternative embodiment, the judgment about whether the traffic flow parameter satisfies the predetermined condition may also be performed on the upper layer. In another alternative embodiment, all the processing may be performed on the upper layer.

The measurement of the signal quality parameter and the traffic flow parameter are usually performed on the bottom layer. In that case, when the judgment about whether the traffic flow parameter satisfies the predetermined condition is performed on the upper layer, the bottom layer reports both the signal quality parameter and the traffic flow parameter to the upper layer; and when the judgment about whether the traffic flow parameter satisfies the predetermined condition is performed on the bottom layer, the bottom layer only needs to report the signal quality parameter to the upper layer if it is judged that the traffic flow parameter satisfies the predetermined condition.

In addition, the judgment about whether the signal quality parameter satisfies the predetermined condition is usually performed on the upper layer. When the judgment about whether the signal quality parameter satisfies the predetermined condition is performed, sometimes certain preprocessing may be performed on the upper layer, e.g., a weighted average may be calculated for the previously processed signal quality parameter and the quality parameter newly reported by the bottom layer.

Moreover, in Fig. 4 the timer may be replaced by a counter. In that case, the judgment in step 405 may be modified as judging whether a predetermined number of times of counting is reached. On this occasion, the interference avoidance message is transmitted only when the positive results of the judgment about whether the signal quality parameter satisfies the predetermined condition and the judgment about whether the traffic flow parameter satisfies the predetermined condition continuously last for a predetermined number of times.

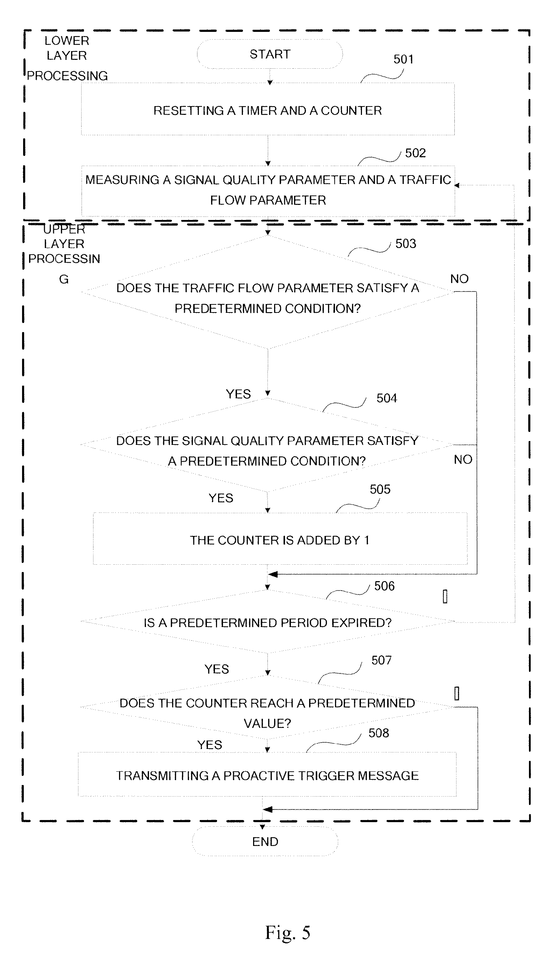

Fig. 5 is a flowchart of a method for triggering an interference avoidance message according to another embodiment of the present invention.

As illustrated in Fig. 5, firstly in step 501, a timer and a counter are reset for example both as 0. Next, in step 502, a traffic flow parameter and a signal quality parameter are measured. Next, in step 503, it is judged whether the traffic flow parameter satisfies a predetermined condition. When it is judged in step 503 that the traffic flow parameter does not satisfy the predetermined condition (step 503, No), the process goes to step 506. On the other hand, when it is judged in step 503 that the traffic flow parameter satisfies the predetermined condition (step 503, Yes), the process enters step 504. In step 504, it is judged whether the signal quality parameter satisfies a predetermined condition. When it is judged in step 504 that the signal quality parameter does not satisfy the predetermined condition (step 504, No), the process goes to step 506. On the other hand, when it is judged in step 504 that the signal quality parameter satisfies the predetermined condition (step 504, Yes), the process enters step 505. In step 505, the value of the counter is increased. In one embodiment, the value of the counter is increased by 1 or others. Next, the process enters step 506, and it is judged in step 506 whether a predetermined period is expired. When it is judged in step 506 that the predetermined period is still not expired (step 506, No), the process returns to step 502, and measures the signal quality parameter and the traffic flow parameter. When it is judged in step 506 that the predetermined period is expired (step 506, Yes), the process judges in step 507 whether the value of the counter is larger than a predetermined value (whether the number of times the measured signal quality parameter and traffic flow parameter both satisfy a predetermined condition in a predetermined period, satisfies a certain condition). When it is judged that the value of the counter is not larger than the predetermined value (step 507, No), the process ends. When it is judged that the value of the counter is larger than the predetermined value (step 507, Yes), a reactive trigger message is determined to be transmitted. Next, in step 508, the reactive trigger message is transmitted, and then the process ends.

In the embodiment as illustrated in Fig. 5, the measurement of the signal quality parameter and the traffic flow parameter is performed on the bottom layer; while the judgment about whether the traffic flow parameter satisfies the predetermined condition, and the judgment about whether the signal quality parameter satisfies the predetermined condition, are performed on the upper layer, but the situation is not restrictive. In an alternative embodiment, all the processing may be performed on the upper layer. In addition, the judgment about whether the traffic flow parameter satisfies the predetermined condition may also be performed on the bottom layer.

To be noted, Figs. 4-5 only illustrate one judgment process. In practical applications, after one judgment is ended, a next judgment usually will be performed, for example, resetting the timer or the counter.

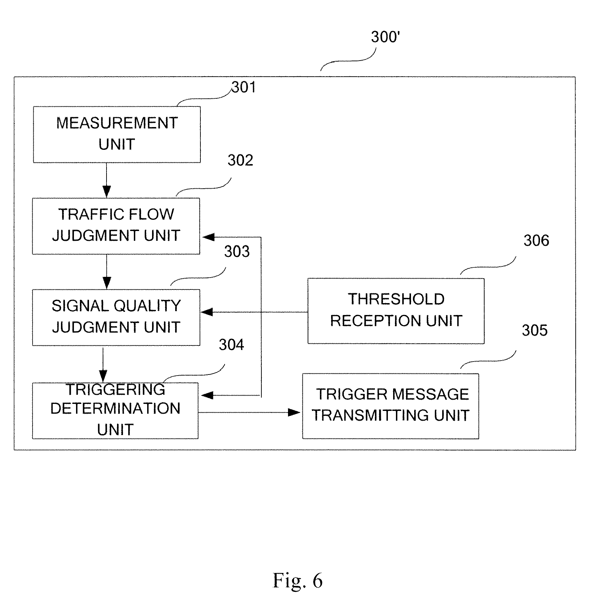

Fig. 6 is a functional block diagram of a communication device 300' according to another embodiment of the present invention. Fig. 6 is just schematic, and other functional parts not influencing the understanding of the present invention are omitted. As compared with the communication device in Fig. 3, the communication device in Fig. 6 is added with a threshold reception unit 306 configured to receive, from the base station (in an alternative embodiment, from the user through a man-machine interface of the communication device), threshold(s) required for judgment(s) and determination(s) made by any one, two or all the three of the traffic flow judgment unit 302, the signal quality judgment unit 303 and the triggering determination unit 304.

For example, in a case where the traffic flow judgment unit 302 judges whether the traffic flow parameter satisfies a predetermined condition by judging whether the number of LTE sub-frames influenced by the coexisted module is larger than a predetermined threshold, the threshold reception unit 306 receives the threshold from the base station, and the traffic flow judgment unit 302 judges whether the traffic flow parameter satisfies the predetermined condition according to the threshold.

For another example, in a case where the signal quality judgment unit 303 judges whether the signal quality parameter satisfies a predetermined condition by judging whether the received signal quality of the LTE module is lower than a predetermined threshold, the threshold reception unit 306 receives the threshold from the base station, and the signal quality judgment unit 303 judges whether the signal quality parameter satisfies the predetermined condition according to the threshold.

For still another example, the threshold reception unit 306 may receive a threshold (also referred to as triggering condition threshold) of the counter and/or the timer, and the triggering determination unit 304 determines whether the timer undergoes a predetermined period and/or whether the counter reaches a predetermined value according to the threshold, so as to judge whether the trigging condition (the condition for transmitting a trigger message) is satisfied.

In an alternative embodiment, a requesting unit may be further comprised to request the base station to transmit corresponding threshold.

In that case, corresponding threshold reception step shall be added into the flowcharts of Figs. 4-5, and that step may be arranged to be closely before step 501 or step 401.

Other operations of the measurement unit 301, the traffic flow judgment unit 302, the signal quality judgment unit 303, the triggering determination unit 304 and the trigger message transmitting unit 305 are substantially the same as the previous descriptions, and herein are omitted.

To be noted, the measured traffic flow parameter and signal quality parameter may be either the traffic flow parameter and the signal quality parameter related to the current service frequency of the LTE module, or the traffic flow parameter and the signal quality parameter related to the non-current service frequency of the LTE module. When the measured traffic flow parameter and signal quality parameter are the traffic flow parameter and the signal quality parameter related to the current service frequency of the LTE module, a reactive trigger message is triggered; and when the measured traffic flow parameter and signal quality parameter are the traffic flow parameter and the signal quality parameter related to the non-current service frequency of the LTE module, a proactive trigger message is triggered. Of course, the measured signal quality parameter may be either the signal quality parameter related to the current service frequency of the LTE module, or the signal quality parameter related to the non-current service frequency of the LTE module.

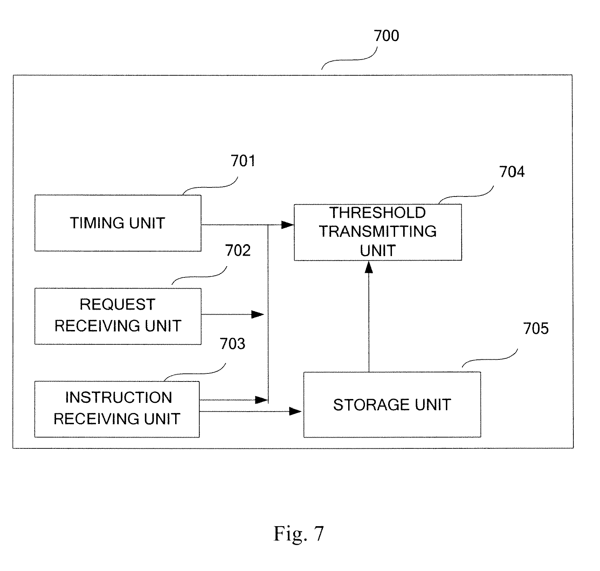

Fig. 7 is a schematic block diagram of a base station according to an embodiment of the present invention. As illustrated in Fig. 7, according to an embodiment of the present invention, a base station 700 comprises a timing unit 701, a request receiving unit 702, an instruction receiving unit 703, a threshold transmitting unit 704 and a storage unit 705.

The timing unit 701 is configured for timing, and when a predetermined period is expired, the threshold transmitting unit 704 transmits a signal quality judgment threshold, and/or a traffic flow judgment threshold, and/or a triggering condition threshold to the mobile terminal. That is, in different embodiments, any one, two or all the three of the signal quality judgment threshold, the traffic flow judgment threshold and the triggering condition threshold may be transmitted. The traffic flow judgment unit 302, the signal quality judgment unit 303 and the triggering determination unit 304 may make their respective judgments and determinations according to the received corresponding thresholds.

The request receiving unit 702 receives a request from the mobile terminal, and when the request from the mobile terminal is received, the threshold transmitting unit 704 transmits the signal quality judgment threshold, and/or the traffic flow judgment threshold, and/or the triggering condition threshold to the mobile terminal.

The instruction receiving unit 703 is configured to receive an instruction of transmitting the signal quality judgment threshold, and/or the traffic flow judgment threshold, and/or the triggering condition threshold, for example from the operator of the base station. In that case, the instruction receiving unit 703 may further receive the specific values of a signal quality judgment threshold, and/or a traffic flow judgment threshold, and/or a triggering condition threshold. The threshold transmitting unit 704 transmits the signal quality judgment threshold, the traffic flow judgment threshold and/or the triggering condition threshold to the mobile terminal.

When the request receiving unit 702 receives the request from the mobile terminal, or the instruction receiving unit 703 receives the instruction, the timing unit 701 may be reset.

The storage unit 705 is configured to store corresponding signal quality judgment threshold, and/or traffic flow judgment threshold, and/or triggering condition threshold.

The timing unit 701, the request receiving unit 702 and the instruction receiving unit 703 in Fig. 7 are examples of the command unit in the embodiment of the present invention. But in different embodiments, any one or two of them may only be existed.

The present invention also relates to a processing method of the base station in Fig. 7. Since such method for processing can be understood based on the above descriptions, it is omitted herein.

The above devices and methods of the present invention may be implemented by hardware, or a combination of hardware and software. The present invention relates to a logic part readable program which when being executed by a logic part, enables the logic part to implement the aforementioned device or constituent parts, or enables the logic part to implement the aforementioned methods or steps. The logic part for example may be a field programmable logic part, a microprocessor, a processor used in the computer, etc. The present invention further relates to a storage medium for storing the above program, such as hard disc, magnetic disc, optical disc, DVD, flash, magnetic optical disc, memory card, memory stick, etc.

The present invention is described as above in conjunction with specific embodiments. But a person skilled in the art shall appreciate that those descriptions are just exemplary, rather than limitations to the protection scope of the present invention. A person skilled in the art can make various modifications and changes to the present invention based on the spirit and the principle of the present invention, and those modifications and changes also fall within the scope of the present invention.

## Claims

1. A method for triggering an interference avoidance message, for a communication terminal having a Long Term Evolution (LTE) module and a communication module coexisted with the LTE module, the method comprising:
a measurement process for measuring a signal quality parameter and a traffic flow parameter;
a traffic flow judgment process for judging whether the traffic flow parameter satisfies a predetermined condition;
a signal quality judgment process for judging whether the signal quality parameter satisfies a predetermined condition;
a triggering determination process for determining whether a trigging condition is satisfied according to a judgment result of the traffic flow judgment process and a judgment result of the signal quality judgment process; and
transmitting the interference avoidance message when the triggering determination process determines that the trigging condition is satisfied.

2. The method according to claim 1, wherein the traffic flow parameter is the number of LTE-received sub-frames influenced by the communication module coexisted with the LTE module, and it is judged in the traffic flow judgment process that the traffic flow parameter satisfies the predetermined condition when the number of LTE-received sub-frames influenced by the communication module coexisted with the LTE module is larger than a certain threshold.

3. The method according to claim 1, wherein the traffic flow parameter is the number of LTE sub-frames influenced by the communication module coexisted with the LTE module, and it is judged in the traffic flow judgment process that the traffic flow parameter satisfies the predetermined condition when the number of LTE sub-frames influenced by the communication module coexisted with the LTE module is larger than a predetermined threshold.

4. The method according to claim 1, wherein the traffic flow parameter being the number of LTE sub-frames influenced by the communication module coexisted with the LTE module and the number of LTE-received sub-frames, and it is judged in the traffic flow judgment process that the traffic flow parameter satisfies the predetermined condition when the number of LTE-received sub-frames is smaller than a first predetermined threshold and the number of LTE sub-frames influenced by the communication module coexisted with the LTE module is larger than a second predetermined threshold.

5. The method according to claim 1, wherein the traffic flow parameter is a ratio between the number of LTE-received sub-frames influenced by the communication module coexisted with the LTE module and the number of LTE-received sub-frames, and it is judged in the traffic flow judgment process that the traffic flow parameter satisfies the predetermined condition when the ratio between the number of LTE-received sub-frames influenced by the communication module coexisted with the LTE module and the number of LTE-received sub-frames is larger than a predetermined threshold.

6. The method according to claim 1, wherein the signal quality parameter is a received signal quality parameter of the LTE module, and it is judged in the signal quality judgment process that the signal quality parameter satisfies the predetermined condition when a received signal quality of the LTE module is lower than a predetermined threshold.

7. The method according to claim 6, wherein the received signal quality parameter is reference signal received power and/or reference signal received quality.

8. The method according to claim 1, wherein the signal quality parameter is a difference between a reference signal received quality parameter of a signal transmitted from a base station to the LTE module and a reference signal received quality parameter of a mixed signal of the signal transmitted from the base station to the LTE module and a signal transmitted from the coexisted module, and it is judged in the signal quality judgment process that the signal quality parameter satisfies the predetermined condition when the difference is larger than a predetermined threshold.

9. The method according to claim 1, wherein the triggering determination process determines that the trigging condition is satisfied, when a situation, in which the judgment results of the signal quality judgment process and the traffic flow judgment process are both positive, lasts for a predetermined period, or the positive judgment results of the signal quality judgment process and the traffic flow judgment process continuously last for a predetermined number of times, or the number of times the judgment results of the signal quality judgment process and the traffic flow judgment process are both positive is larger than a predetermined number of times during a predetermined period.

10. The method according to claim 1, further comprising a threshold reception process for receiving a threshold required for each judgment and determination in any one, two or all the three of the traffic flow judgment process, the signal quality judgment process and the triggering determination process.

11. The method according to claim 1, wherein the measurement process measures the signal quality parameter related to a service frequency and/or non-service frequency of the LTE module and the traffic flow parameter.

12. A communication terminal having a Long Term Evolution (LTE) module and a communication module coexisted therewith, comprising:
a measurement unit configured to measure a signal quality parameter and a traffic flow parameter;
a traffic flow judgment unit configured to judge whether the traffic flow parameter satisfies a predetermined condition;
a signal quality judgment unit configured to judge whether the signal quality parameter satisfies a predetermined condition;
a triggering determination unit configured to determine whether a trigging condition is satisfied according to a judgment result of the traffic flow judgment unit and a judgment result of the signal quality judgment unit; and
an interference avoidance message transmitting unit configured to transmit an interference avoidance message when the triggering determination unit determines that the trigging condition is satisfied.

13. The communication terminal according to claim 12, wherein the traffic flow parameter is the number of LTE-received sub-frames influenced by the communication module coexisted with the LTE module, and the traffic flow judgment unit judges that the traffic flow parameter satisfies the predetermined condition when the number of LTE-received sub-frames influenced by the communication module coexisted with the LTE module is larger than a certain threshold.

14. The communication terminal according to claim 12, wherein the traffic flow parameter is the number of LTE sub-frames influenced by the communication module coexisted with the LTE module, and the traffic flow judgment unit judges that the traffic flow parameter satisfies the predetermined condition when the number of LTE sub-frames influenced by the communication module coexisted with the LTE module is larger than a predetermined threshold.

15. The communication terminal according to claim 12, wherein the traffic flow parameter being the number of LTE sub-frames influenced by the communication module coexisted with the LTE module and the number of LTE-received sub-frames, and the traffic flow judgment unit judges that the traffic flow parameter satisfies the predetermined condition when the number of LTE-received sub-frames is smaller than a first predetermined threshold and the number of LTE sub-frames influenced by the communication module coexisted with the LTE module is larger than a second predetermined threshold.

16. The communication terminal according to claim 12, wherein the traffic flow parameter is a ratio between the number of LTE-received sub-frames influenced by the communication module coexisted with the LTE module and the number of LTE-received sub-frames, and the traffic flow judgment unit judges that the traffic flow parameter satisfies the predetermined condition when the ratio between the number of LTE-received sub-frames influenced by the communication module coexisted with the LTE module and the number of LTE-received sub-frames is larger than a predetermined threshold.

17. The communication terminal according to claim 12, wherein the signal quality parameter is a received signal quality parameter of the LTE module, and the signal quality judgment unit judges that the signal quality parameter satisfies the predetermined condition when a received signal quality of the LTE module is lower than a predetermined threshold.

18. The communication terminal according to claim 17, wherein the received signal quality parameter is reference signal received power and/or reference signal received quality.

19. The communication terminal according to claim 12, wherein the signal quality parameter is a difference between a reference signal received quality parameter of a signal transmitted from a base station to the LTE module and a reference signal received quality parameter of a mixed signal of the signal transmitted from the base station to the LTE module and a signal transmitted from the coexisted module, and the signal quality judgment unit judges that the signal quality parameter satisfies the predetermined condition when the difference is larger than a predetermined threshold.

20. The communication terminal according to claim 12, wherein the triggering determination unit determines that the trigging condition is satisfied, when a situation, in which the judgment results of the signal quality judgment unit and the traffic flow judgment unit are both positive, lasts for a predetermined period, or the positive judgment results of the signal quality judgment unit and the traffic flow judgment unit continuously last for a predetermined number of times, or the number of times the judgment results of the signal quality judgment unit and the traffic flow judgment unit are both positive is larger than a predetermined number of times during predetermined period.

21. The communication terminal according to claim 12, further comprising a threshold reception unit for receiving a threshold required for each judgment and determination in any one, two or all the three of the traffic flow judgment unit, the signal quality judgment unit and the triggering determination unit.

22. The communication terminal according to claim 12, wherein the measurement unit measures the signal quality parameter related to a service frequency and/or non-service frequency of the LTE module and the traffic flow parameter.

23. A base station, comprising a command unit, a threshold transmitting unit and a storage unit,
the command unit is configured to generate a command instructing the threshold transmitting unit to transmit any one, two or all the three of a signal quality judgment threshold, a traffic flow judgment threshold and a triggering condition threshold,
when receiving the command of the command unit, the threshold transmitting unit transmits the signal quality judgment threshold and/or the traffic flow judgment threshold and/or the triggering condition threshold corresponding to the command and stored in the storage unit,
the signal quality judgment threshold is used by a communication device served by the base station to judge whether the signal quality parameter satisfies a predetermined condition,
the traffic flow judgment threshold is used by the communication device served by the base station to judge whether the traffic flow satisfies a predetermined condition, and
the triggering condition threshold is used by the communication device served by the base station to determine whether an interference avoidance message shall be transmitted.

24. The base station according to claim 23, wherein the command unit being any one or more of the following units:
a timing unit configured to instruct the threshold transmitting unit to transmit when a predetermine period is expired;
a request receiving unit configured to receive a threshold transmitting request from the communication device served by the base station, and instruct, according to the request, the threshold transmitting unit to transmit; and
an instruction receiving unit configured to receive a threshold transmitting instruction, and instruct, according to the instruction, the threshold transmitting unit to transmit.

25. The base station according to claim 24, wherein the command unit comprises the timing unit, and the request receiving unit and/or the instruction receiving unit, and the timing unit counts time again when the request receiving unit receives the request or the instruction receiving unit receives the instruction.
